**Europäisches Patentamt**

**European Patent Office**

**Office européen des brevets**

(19)

(11) Veröffentlichungsnummer : **0 377 813 B1**

(12) ## EUROPÄISCHE PATENTSCHRIFT

(45) Veröffentlichungstag der Patentschrift :
**11.11.92 Patentblatt 92/46**

(51) Int. Cl.⁵ : **B32B 25/10**

(21) Anmeldenummer : **89121787.9**

(22) Anmeldetag : **25.11.89**

(54) **Verdeckstoff für Fahrzeuge.**

(30) Priorität : **13.01.89 DE 3900846**

(43) Veröffentlichungstag der Anmeldung :
**18.07.90 Patentblatt 90/29**

(45) Bekanntmachung des Hinweises auf die
Patenterteilung :
**11.11.92 Patentblatt 92/46**

(84) Benannte Vertragsstaaten :
**AT CH DE ES FR GB IT LI NL SE**

(56) Entgegenhaltungen :
**EP-A- 0 169 432**
**US-A- 3 949 129**

(73) Patentinhaber : **Gebr. Happich GmbH
Postfach 10 02 49 Clausenbrücke 1
W-5600 Wuppertal 1 (DE)**

(72) Erfinder : **Cramer, Johannes
Kalkhoffsweg 2
W-4422 Ahaus (DE)**
Erfinder : **Winterberg, Erwin
Mollenkotten 241
W-5600 Wuppertal 2 (DE)**
Erfinder : **Nockemann, Hans
Zum Lohbusch 54 B
W-5600 Wuppertal 1 (DE)**

EP 0 377 813 B1

## Beschreibung

Die Erfindung bezieht sich auf einen Verdeckstoff für Fahrzeuge, insbesondere Cabriolets, mit einem Obergewebe, einem Unterstoff und einer dazwischen angeordneten Gummierung.

Verdeckstoffe für Fahrzeuge insbersondere solche der eingangs genannten Art, sind seit Jahrzehnten bekannt. Sie haben einen Standard erreicht, der auch den heutigen Ansprüchen dem Grunde nach gerecht wird. Es hat sich jedoch gezeigt, daß z.B. aggressive Umweltbelastungen auch die herkömmlichen Verdeckstoffe, beispielsweise in bezug auf die von der Abnehmerschaft gewünschte Wetterechtheit, Schmutzempfindlichkeit und Lebensdauer in Mitleidenschaft ziehen können.

Der Erfindung liegt demgemäß die Aufgabe zugrunde, einen Verdeckstoff für Fahrzeuge, insbesondere Cabriolets zur Verfügung zu stellen, der den laufend höher werdenden Anforderungen genügt und der sich durch wesentlich verbesserte Gebraucheigenschaften auszeichnen soll.

Der zur Lösung dieser Aufgabe vorgesehene erfindungsgemäße Verdeckstoff zeichnet sich durch eine Merkmalskombination aus, gemäß der vorgesehen ist, daß das Obergewebe aus aus Polyacrylnitril bestehenden Kett- und Schußfaden gebildet ist, daß zumindest die Kettfäden des Obergewebes aus Endlosfäden (Multifilaments) bestehen, daß das Obergewebe eine zumindest gewebeoberseitige Beschichtung aufweist, daß die Gummierung zwischen Obergewebe und Unterstoff zweischichtig ausgeführt ist und daß zwischen den Gummierungsschichten eine Zwischenlage aus im Vergleich zu den Gummierungsschichten hochfestem Material eingebettet ist.

Durch diese erfindungsgemäßen Merkmale werden wesentliche Vorteile in verschiedener Hinsicht erzielt. So weist der erfindungsgemäße Verdeckstoff eine hohe Licht- und Wetterbeständigkeit auf, wie er sich auch durch eine gute Elastizität und Wärmehaltung auszeichnet. Die Maßnahme, die Kettfäden aus Endlosfäden zu bilden, trägt sowohl zur Verbesserung der Festigkeit als auch zur Verminderung der Dehnung des Verdeckstoffes bei. Durch die Beschichtung des Obergewebes, die aus einem transparenten Kunststoffmaterial bestehen kann, oder für die insbesondere ein Beschichtungsmittel auf der Basis von fluorhaltigen Polymeren, wie TFB(Tetrafluorobutylen)-Dispersionen vorgesehen sein kann, ergibt sich für den Verdeckstoff vorteilhafterweise eine besondere Qualitätsverbesserung, und zwar in bezug auf Wetterfestigkeit, geringerer Schmutzanhaftung und besserer Pflegemöglichkeit, zu der insbesondere auch eine Waschstraßenfestigkeit gehört. Ein weiterer wesentlicher Vorteil ist im erhöhten UV-Schutz zu sehen, woraus sich wiederum eine verlängerte Lebensdauer ableitet. Weitere Vorteile sind gute Gleiteigenschaften, Antiadhäsivität, Hydrophobie und hohe Chemikalienbeständigkeit. Die besonderen Vorteile der erfindungsgemäß vorgesehenen Zwischenlage bestehen darin, daß der Verdeckstoff eine hohe Festigkeit bei geringerer Dehnfähigkeit erhält und auch schwieriger, z.B. mit einem Messer aufzuschlitzen ist. Auch wird durch diese Maßnahme der heute noch oftmals zu beobachtenden Ballonbildung bei Cabriolet-Dächern (hervorgerufen durch die Druckdifferenz zwischen Fahrzeugaußen -und -innenluft bei hoher Geschwindigkeit) entgegengewirkt, während die erschwerte Aufschlitzbarkeit des Verdeckstoffs einen verbesserten Diebstahlschutz gewährleistet.

Die vorgenannten Vorteile können noch optimiert werden, wenn gemäß einer Weiterbildung der Erfindung vorgesehen wird, daß die Zwischenlage aus Fasern oder Fäden aus (Tetrafluorobutylen) hochfestem Material bestehen, wobei insbesondere an Aramid gedacht ist. Die Fasern oder Fäden können aber auch aus Kohlenstoff, Glas, Stahl oder hochverstrecktem Polyäthylen bestehen.

Bevorzugterweise ist vorgesehen, daß die Zwischenlage aus einem Gittergewebe besteht, das aus Fasern oder Fäden aus im Vergleich zu den Gummierungsschichten hochfestem Material, vorzugsweise Aramidfäden gebildet ist. Dabei besteht eine Weiterbildung noch darin, daß die Kett- und Schußfäden des Gittergewebes in einem Winkel zwischen 30 ° und 60 °, vorzugsweise 45 ° zur Gewebelängsachse verlaufen. Damit wird der Verdeckstoff isotrop, d. h. gleich dehnbar in Längs-, Quer- und Diagonal-Richtung. Ein Zerschneiden des Verdeckstoffes wird damit weiterhin erschwert und zudem wird eine Ermüdung des Verdeckstoffes entgegengewirkt.

In weiterer Ausgestaltung der Erfindung ist vorgesehen, daß der Unterstoff aus einem, zumindest überwiegend aus synthetischen Fasern oder Fäden gebildeten Gewebe oder Gewirke besteht. Hierdurch wird der Vorteil einer relativ hohen Scheuerfestigkeit erzielt, was besonders bei automatisch aus- und einfahrenden Cabriolet-Verdecken von enormer Wichtigkeit ist, weil hier eine erhöhte Verschleißbeanspruchung besteht. Durch den Unterstoff ergibt sich auch die Möglichkeit einer farblichen Anpassung des Verdeckstoffs an die jeweilige Fahrzeuginnenausstattung.

Eine Weiterbildung der Erfindung zeichnet sich dadurch aus, daß im Obergewebe, in der Zwischenlage oder im Unterstoff Fasern, Fäden, Drähte oder Folienstreifen aus elektrisch leitendem Material eingelagert sind. Auf diese Weise wird sichergestellt, daß auch ein Cabriolet als "Faradayischer Käfig" zu wirken vermag. Zudem wird durch diese Maßnahme die Möglichkeit eröffnet, daß der Verdeckstoff mit einer, einen erhöhten Diebstahlschutz bietenden Alarmanlage verbindbar ist.

Vorzugsweise ist das Obergewebe imprägniert (Tauchbeschichtung), und zwar insbesondere mit TF-

(Tetrafluoro)-Dispersionen, die im Handel z.B. unter der Bezeichnung "Hostaflon"® erhältlich sind.

## Patentansprüche

1. Verdeckstoff für Fahrzeuge, insbesondere Cabriolets, mit einem Obergewebe, einem Unterstoff und einer dazwischen angeordneten Gummierung, dadurch gekennzeichnet, daß das Obergewebe aus aus Polyacrylnitril bestehenden Kett- und Schußfäden gebildet ist, daß zumindest die Kettfäden des Obergewebes aus Endlosfäden (Multifilaments) bestehen, daß das Obergewebe eine zumindest gewebeoberseitige Beschichtung aufweist, daß die Gummierung zwischen Obergewebe und Unterstoff zweischichtig ausgeführt ist und daß zwischen den Gummierungsschichten eine Zwischenlage aus im Vergleich zu den Gummierungsschichten hochfestem Material eingebettet ist.

2. Verdeckstoff nach Anspruch 1, dadurch gekennzeichnet, daß das Obergewebe zumindest gewebeoberseitig mit transparentem Kunststoffmaterial beschichtet ist.

3. Verdeckstoff nach Anspruch 1 oder 2, dadurch gekennzeichnet, daß eine Beschichtung mit Beschichtungsmitteln auf der Basis von fluorhaltigen Polymeren, wie TFB(Tetrafluorobutylen)-Dispersionen vorgesehen ist.

4. Verdeckstoff nach wenigstens einem der Ansprüche 1 bis 3, dadurch gekennzeichnet, daß die Zwischenlage aus Fasern oder Fäden aus im Vergleich zu den Gummierungsschichten hochfestem Material besteht.

5. Verdeckstoff nach Anspruch 4, dadurch gekennzeichnet, daß die Fasern oder Fäden aus Aramid bestehen.

6. Verdeckstoff nach Anspruch 4, dadurch gekennzeichnet, daß die Fasern oder Fäden aus Kohlenstoff, Glas, Stahl oder hochverstrecktem Polyäthylen bestehen.

7. Verdeckstoff nach wenigstens einem der Ansprüche 1 bis 3, dadurch gekennzeichnet, daß die Zwischenlage aus einem Gittergewebe besteht, das aus Fasern oder Fäden aus im Vergleich zu den Gummierungsschichten hochfestem Material, vorzugsweise Aramidfäden gebildet ist.

8. Verdeckstoff nach Anspruch 7, dadurch gekennzeichnet, daß die Kett- und Schußfäden des Gittergewebes in einem Winkel zwischen 30 ° und 60 °, vorzugsweise 45 ° zur Gewebelängsachse verlaufen.

9. Verdeckstoff nach wenigstens einem der Ansprüche 1 bis 8, dadurch gekennzeichnet, daß der Unterstoff aus einem, zumindest überwiegend aus synthetischen Fasern oder Fäden gebildeten Gewebe oder Gewirke besteht.

10. Verdeckstoff nach wenigstens einem der Ansprüche 1 bis 9, dadurch gekennzeichnet, daß im Obergewebe, in der Zwischenlage oder im Unterstoff Fasern, Fäden, Drähte oder Folienstreifen aus elektrisch leitendem Material eingelagert sind.

11. Verdeckstoff nach wenigstens einem der Ansprüche 1 bis 10, dadurch gekennzeichnet, daß das Obergewebe imprägniert ist.

## Claims

1. A folding-top material for vehicles, especially convertibles, comprising an upper fabric, a lining fabric and a rubber coating in between, characterised in that the upper fabric is made from polyacrylnitrile warp and weft threads, at least the warp threads in the upper fabric comprise endless threads (multifilaments), the upper fabric has a coating at least on its top surface, the rubber coating between the upper fabric and the lining fabric is in two layers, and an intermediate layer of high-strength material, compared to the rubber layers, is embedded between the rubber layers.

2. A folding-top material according to claim 1, characterised in that the upper fabric is coated with transparent plastics, at least on its upper surface.

3. A folding-top material according to claim 1 or 2, characterised in that the coating is of coating agents based on fluorinated polymers such as TFB (tetrafluorobutylene) dispersions.

4. A folding-top material according to any of claims 1 to 3, characterised in that the intermediate layer is made of fibres or threads of high-strength material in relation to the rubber layers.

5. A folding-top material according to claim 4, characterised in that the fibres or threads are of aramid.

6. A folding-top material according to claim 4, characterised in that the fibres or threads are of carbon, glass, steel or highly-stretched polyethylene.

7. A folding-top material according to at least one of claims 1 to 3, characterised in that the intermediate layer comprises a lattice fabric made up of fibres or threads of high-strength material relative to the rubber layers, preferably aramid threads.

8. A folding-top material according to claim 7, characterised in that the warp and weft threads of the lattice fabric extend at an angle of 30° to 60°, preferably 45°, to the longitudinal axis of the fabric.

9. A folding-top material according to at least one of claims 1 to 8, characterised in that the lining fabric is a woven or knitted fabric comprising at least mainly synthetic fibres or threads.

10. A folding-top material according to at least one of claims 1 to 9, characterised in that fibres, threads, wires or foil strips of electrically conductive material are incorporated in the upper fabric, the intermediate layer or the lining fabric.

11. A folding top material according to at least one of claims 1 to 10, characterised in that the upper fabric is impregnated.

## Revendications

1. Matière pour capote de véhicules automobiles, en particulier de cabriolets, comportant un tissu de dessus, une doublure et un caoutchoutage placé entre les deux, caractérisée en ce que le tissu de dessus est formé par des fils de chaîne et de trame en polyacrylnitrile, en ce que les fils de chaîne au moins du tissu de dessus sont des fils continus (multifilaments), en ce que le tissu de dessus présente un revêtement au moins sur sa face supérieure, en ce que le caoutchoutage entre le tissu de dessus et la doublure comporte deux couches et en ce que les couches de caoutchoutage comprennent entre elles une couche intermédiaire en matière très résistance par rapport aux couches de caoutchoutage.

2. Matière pour capote selon la revendication 1, caractérisée en ce que le tissu de dessus est revêtu au moins sur sa face supérieure d'une matière plastique transparente.

3. Matière pour capote selon la revendication 1 ou 2, caractérisée en ce qu'il est prévu un revêtement avec des produits pour revêtements à base de polymères contenant du fluor tels que des dispersions de TFB (tétrafluorbutylène).

4. Matière pour capote selon l'une au moins des revendications 1 à 3, caractérisée en ce que la couche intermédiaire est réalisée dans des fibres ou des fils d'une matière hautement résistante par rapport aux couches de caoutchoutage.

5. Matière pour capote selon la revendication 4, caractérisée en ce que les fibres ou les fils sont en aramide.

6. Matière pour capote selon la revendication 4, caractérisée en ce que les fibres ou les fils sont en carbone, verre, acier ou polyéthylène très étiré.

7. Matière pour capote selon l'une au moins des revendications 1 à 3, caractérisée en ce que la couche intermédiaire est un tissu en filet qui est formé par des fibres ou des fils en matière très résistante par rapport aux couches de caoutchoutage, de préférence en fils d'aramide.

8. Matière pour capote selon la revendication 7, caractérisée en ce que les fils de chaîne et de trame du tissu en filet forment un angle compris entre 30° et 60°, de préférence égal à 45°, par rapport à l'axe longitudinal du tissu.

9. Matière pour capote selon l'une au moins des revendications 1 à 8, caractérisée en ce que la doublure est constituée d'un tissu ou d'un tricot, formé au moins en majorité de fibres ou de fils synthétiques.

10. Matière pour capote selon l'une au moins des revendications 1 à 9, caractérisée en ce que dans le tissu de dessus, dans la couche intermédiaire ou dans la doublure sont insérés des fibres, des fils, des fils métalliques ou des bandes de feuille en matière électriquement conductrice.

11. Matière pour capote selon l'une au moins des revendications 1 à 10, caractérisée en ce que le tissu de dessus est imprégné.